# EUROPEAN PATENT SPECIFICATION

(11) **EP 3 057 359 B1**
(45) Date of publication and mention of the grant of the patent: **19.06.2019**
(21) Application number: 14895705.3
(22) Date of filing: 23.06.2014
(51) Int. Cl.: H04W 36/16, H04W 48/18, H04W 88/06

(54) **NETWORK SWITCHING METHOD AND TERMINAL**
NETZWERKSCHALTVERFAHREN UND ENDGERÄT
PROCÉDÉ DE CHANGEMENT DE RÉSEAU ET TERMINAL

(43) Date of publication of application: 17.08.2016
(73) Proprietor: Huawei Technologies Co. Ltd., Shenzhen, Guangdong 518129 (CN)
(72) Inventor: YU, Shucheng, Shenzhen Guangdong 518129 (CN)
(74) Representative: Goddar, Heinz J.
(86) International application number: PCT/CN2014/080538
(87) International publication number: WO 2015/196341

(56) References cited:
- EP-A1- 2 385 677
- WO-A1-2008/081267
- WO-A1-2011/100251
- CN-A- 101 692 742
- CN-A- 102 264 121
- CN-A- 102 711 156
- CN-A- 103 313 334
- CN-A- 103 476 076
- GB-A- 2 475 094
- GB-A- 2 490 989
- US-A1- 2012 252 443
- US-A1- 2012 257 549

## Description

### TECHNICAL FIELD

The present invention relates to the communications field, and in particular, to a network handover method, and a terminal.

### BACKGROUND

The circuit switched fallback (Circuit Switched Fall Back, CSFB) technology is a technology in which a Long Term Evolution (Long Term Evolution, LTE) terminal uses a voice service by means of a circuit switched domain. A piece of User equipment (User Equipment, UE) often camps on an LTE network, and uses a data service provided by the LTE network. When initiating a voice call or receiving a voice call, the UE can fall back to a 2G/3G circuit switched domain network for the voice call, and then hand over to the LTE network after the voice call ends.

A voice of the CSFB technology-based LTE network is implemented by a Global System for Mobile Communications/Universal Mobile Telecommunications System (Global System for Mobile Communication/Universal Mobile Telecommunications System, GU, that is, 2G/3G) network. Therefore, only a high-speed data service can be used in the LTE network, and the long-term camping of the UE on the LTE network leads to great waste of LTE network resources.

WO 2011/100251 A1 discloses a UE that includes one or more processors configured to, responsive to determining that the UE has a voice service solution, set a "selective camping capability bit" and transmit the bit to a network.

EP 2 385 677 A1 discloses a method of controlling packet switched data transmission functionality for a mobile device in a wireless communication system. The method comprises disabling the packet switched data transmission functionality, and being allowed to initiate a telephony service via a circuit switched fallback functionality or via an internet protocol multimedia subsystem signaling even when the packet switched data transmission functionality is disabled.

GB 2490989 A discloses a method, comprising: detecting a preference of a user terminal for a predetermined service, detecting that the current radio access technology (RAT) does not provide the predetermined service; monitoring whether or not another public land mobile network (PLMN) or another RAT of the first PLMN is available; upon detecting that no other PLMN and no other RAT of the first PLMN is available, maintaining connection to the first RAT of the first PLMN until another PLMN or another RAT in the first PLMN becomes available; upon detecting that another PLMN or another RAT is available, considering the first RAT of the first PLMN as disabled due to lack of the predetermined service from the First RAT, and generating an information element to a memory according to which the first RAT of the first PLMN has been marked as disabled, wherein the information element is valid until a predetermined criterion is met and at least beyond a point of time when the user terminal switches to another PLMN and/or to another RAT.

GB 2475094 A discloses in a wireless network, a user equipment that has a capability to communicate using a first radio access technology and a capability to communicate using a second radio access technology that may be disabled or enabled. The wireless network includes a first radio access network supporting communication using a first radio access technology in first service areas and a second radio access network supporting communication using a second radio access technology in second service areas. The user equipment is arranged to disable the capability to communicate using the second radio access technology in response to a determination that a preferred mode of voice communication cannot be provided using the second radio access technology in a second service area, and the user equipment is arranged to enable the capability to communicate using the second radio access technology, on the basis of communications, using the first radio access technology, in a selected one of the first service areas. Unwanted attempts to communicate using the second radio access technology may thus be avoided.

US 2012/252443 A1 discloses embodiments that provide a method for selecting a network by a terminal and a dual-standby terminal. The method includes: enabling, by a first network processing module, a circuit switched (CS) domain to preferably camp on a first network, and executing a CS domain service; enabling, by a second network processing module, a packet switched (PS) domain to preferably camp on a second network, and executing a PS domain service; wherein, signal quality of the first network is better than that of the second network, and a data transmission rate of the second network is higher than that of the first network; and closing the second network processing module when no PS domain service exists in a set duration. These embodiments help improve the service quality and reduce power consumption of the terminal.

### SUMMARY

The present invention provides a network handover method according to claim 1 and a terminal according to claim 5, so that when UE needs to perform a packet switched data service, a handover to a high-speed data network is implemented, which saves high-speed data network resources.

According to a first aspect, an embodiment of the present invention provides a network handover method, applied to a terminal, where the method includes:
receiving an operation instruction for disabling a data service, and handing over, according to the operation instruction for disabling a data service, a second network currently used by the terminal to a first network; or
receiving an operation instruction for enabling a data service, and handing over, according to the operation instruction for enabling a data service, a first network currently used by the terminal to a second network, where
a network standard of the first network is a UMTS network standard or a GSM network standard, and a network standard of the second network is an LTE network standard, wherein if the terminal is not located within coverage of the second network and cannot hand over to the second network, the terminal still camps on the first network and hands over to the second network through reselection when the terminal moves to coverage of the second network.

According to the first aspect, in a first possible implementation manner, before the receiving an operation instruction for disabling a data service, the method further includes: attaching the terminal to the second network.

According to the first aspect or the first possible implementation manner of the first aspect, in a second possible implementation manner, the handing over a second network currently used by the terminal to a first network specifically includes: sending a detach Detach request to a network side device of the second network, so that the terminal is detached from the second network; and sending an attach Attach request to a network side device of the first network, so that the terminal is attached to the first network.

According to the first aspect or the first or second possible implementation manner of the first aspect, in a third possible implementation manner, the handing over a first network currently used by the terminal to a second network specifically includes: sending a routing area update RAU request to the network side device of the second network; and after the network side device receives the routing area update request, reselecting and camping on an idle-state cell of the second network, so that the terminal hands over back to the second network through reselection.

According to a second aspect, an embodiment of the present invention provides a terminal, where the terminal includes a receiving unit, and a first handover unit or a second handover unit, where
the receiving unit is configured to receive an operation instruction for disabling a data service; and
the first handover unit is configured to hand over, according to the operation instruction for disabling a data service, a second network currently used by the terminal to a first network; or
the receiving unit is further configured to receive an operation instruction for enabling a data service; and
the second handover unit is configured to hand over, according to the operation instruction for enabling a data service, a first network currently used by the terminal to a second network, where
a network standard of the first network is a UMTS network standard or a GSM network standard, and a network standard of the second network is an LTE network standard, wherein if the terminal is not located within coverage of the second network and cannot hand over to the second network, the terminal still camps on the first network and hands over to the second network through reselection when the terminal moves to coverage of the second network.

In a first possible implementation manner, the terminal further includes: an attaching unit, configured to attach the terminal to the second network.

According to the second aspect or the first possible implementation manner of the second aspect, in a second possible implementation manner, a process of handing over, by the first handover unit, a second network currently used by the terminal to a first network is specifically: sending a detach Detach request to a network side device of the second network, so that the terminal is detached from the second network; and sending an attach Attach request to a network side device of the first network, so that the terminal is attached to the first network.

According to the second aspect or the first or second possible implementation manner of the second aspect, in a third possible implementation manner, a process of handing over, by the second handover unit, a first network currently used by the terminal to a second network is specifically: sending a routing area update RAU request to the network side device of the second network; and after the network side device receives the routing area update request, reselecting and camping on an idle-state cell of the second network, so that the terminal hands over back to the second network through reselection.

In the network handover method, and the terminal that are provided by the embodiments of the present invention, the terminal receives an operation instruction for disabling a data service, and hands over, according to the operation instruction for disabling a data service, a second network currently used by the terminal to a first network; or receives an operation instruction for enabling a data service, and hands over, according to the operation instruction for enabling a data service, a first network currently used by the terminal to a second network, where a network standard of the first network is a UMTS network standard or a GSM network standard, and a network standard of the second network is an LTE network standard. Therefore, in the present invention, when UE disables a data service and does not use a high-speed data network, an automatic handover to the first network is performed and the terminal may use a service provided by the first network. When the UE needs to perform a packet switched data service, a handover of a network standard to the second network is performed, so that the terminal hands over between the first network and the second network, thereby reducing network resources of the high-speed data network.

### BRIEF DESCRIPTION OF DRAWINGS

FIG. 1 is a flowchart of a network handover method according to an embodiment of the present invention;
FIG. 2 is a schematic diagram of a terminal according to an embodiment of the present invention; and
FIG. 3 is a schematic diagram of another terminal according to an embodiment of the present invention.

### DESCRIPTION OF EMBODIMENTS

The technical solutions of the present invention are further described in detail with reference to accompanying drawings and embodiments as follows:

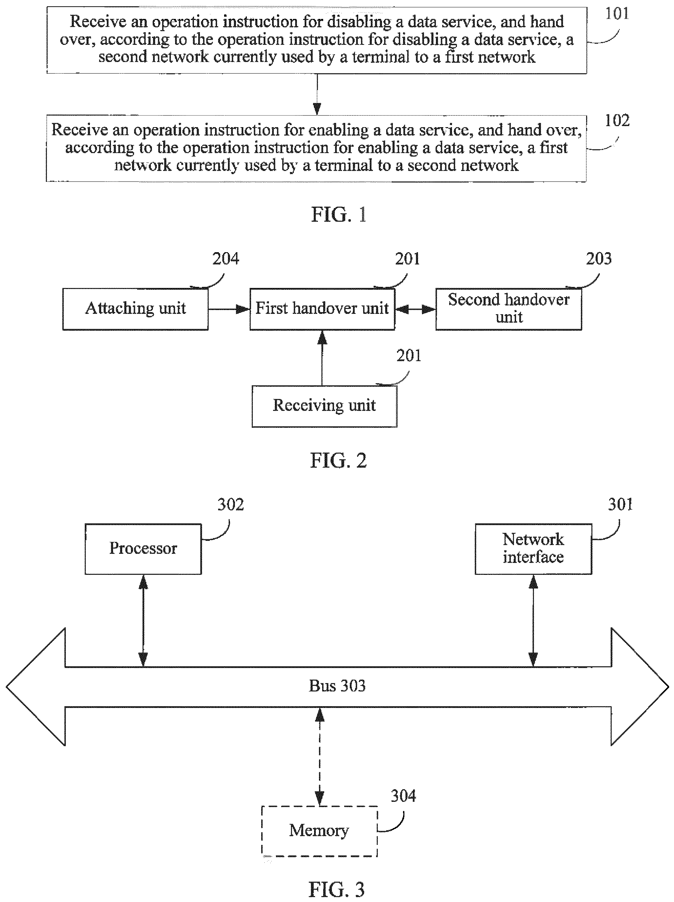

FIG. 1 is a flowchart of a network handover method according to an embodiment of the present invention. This embodiment is executed by a terminal. This embodiment describes in detail a process in which after a terminal currently camping on a second network receives an operation instruction, from a user, for disabling a data service, the terminal hands over the network currently used by the terminal to a first network, and describes a process in which after the terminal receives an operation instruction for enabling a data service, the terminal is re-handed over to the second network. As shown in FIG. 1, this embodiment includes the following steps:

Step 101: Receive an operation instruction for disabling a data service, and handover, according to the operation instruction for disabling a data service, a second network currently used by the terminal to a first network.

In this embodiment of the present invention, after the terminal is turned on in an area covered by LTE, the terminal performs network selection and camps on an LTE network.

When a user does not need to perform a packet switched (Packet Switch, PS) service, a data service of the terminal may be disabled by means of a touch operation or a click operation. When determining that the operation instruction, from the user, for disabling a data service is received, the terminal first performs an operation of deactivating a Packet Data Protocol (Packet Data Protocol, PDP) context, so as to release LTE wireless resources. After releasing the LTE wireless resources, the terminal hands over the originally used second network (such as a network of an LTE network standard) to the first network (such as a network of a 2G/3G network standard).

A network standard of the first network is a GSM network standard or a UMTS network standard, and a network standard of the second network is an LTE network standard.

Specifically, the handing over a network currently used by the terminal to a first network specifically includes: sending a detach Detach request to a network side device of the second network, so that the terminal is detached from the second network; and sending an attach Attach request to a network side device of the first network, so that the terminal is attached to the first network.

Both a process of performing a detach Detach operation between the terminal and the LTE network side and a process of performing an attach Attach operation between the terminal and the 2G/3G network side belong to the prior art. This embodiment of the present invention does not specifically limit the processes, and details are not described herein.

When the user does not need a high-speed data service, the data service may be disabled by means of the operation in step 101, and an automatic handover to the 2G/3G network is performed. In this way, the terminal may use a circuit switched (Circuit Switched, CS) service provided by the 2G/3G network. When the terminal receives a voice call during this period, the terminal may enjoy call connection experience that is the same as that of 2G/3G networks. Generally, a user of a smart terminal disables a data service when the user does not use the data service. Therefore, this operation can effectively improve the call connection experience.

Step 102: Receive an operation instruction for enabling a data service, and handover, according to the operation instruction for enabling a data service, a first network currently used by the terminal to a second network.

When the user needs to perform a PS service, a data service of the terminal may be disabled by means of a touch operation or a click operation. When receiving the operation instruction, from the user, for disabling a data service, the terminal hands over from the originally used first network (such as a network of a 2G/3G network standard) to the second network (such as a network of an LTE network standard).

The handing over a network currently used by the terminal to a second network specifically includes: sending a RAU request to the network side device of the second network; and after the network side device receives the routing area update request, reselecting and camping on an idle-state cell of the second network, so that the terminal hands over back to the second network through reselection.

It should be noted that because the terminal sets the network standard supported by the terminal itself to the second network, which indicates that the terminal already has an LTE capability, after activating a PDP context, the terminal sends the routing area update (RAU) request to notify the network side of the information indicating that the terminal supports the LTE network, and after the network side receives the routing area update request, the terminal reselects an idle-state cell and hands over back to the LTE network. Both the routing area update and the idle-state cell reselection belong to the prior art. This embodiment of the present invention does not specifically limit the processes, and details are not described herein.

If the terminal currently is not located within coverage of the LTE network, the terminal cannot camp on the LTE network through selection, that is, the terminal cannot hand over to the second network, and at this time, the terminal may still camp on a UMTS network or a GSM network. However, when the terminal moves to the coverage of the LTE network, the terminal hands over to the LTE network through reselection.

In this embodiment of the present invention, a terminal receives an operation instruction for disabling a data service, and hands over, according to the operation instruction for disabling a data service, a second network currently used by the terminal to a first network; or receives an operation instruction for enabling a data service, and hands over, according to the operation instruction for enabling a data service, a first network currently used by the terminal to a second network standard, and a network standard of the second network is an LTE network standard. Therefore, in the present invention, when UE disables a data service and does not use a high-speed data network, an automatic handover to the first network is performed and the terminal may use a service provided by the first network. When the UE needs to perform a packet switched data service, a handover of a network standard to the second network is performed, so that the terminal hands over between the first network and the second network, thereby reducing network resources of the high-speed data network.

Correspondingly, the present invention further provides a terminal. FIG. 2 is a schematic diagram of a terminal according to an embodiment of the present invention. As shown in FIG. 2, the terminal provided by this embodiment includes a receiving unit 201, and a first handover unit 202 or a second handover unit 203.

The receiving unit 201 is configured to receive an operation instruction for disabling a data service.

The first handover unit 202 is configured to hand over, according to the operation instruction for disabling a data service, a second network currently used by the terminal to a first network.

A process of handing over, by the first handover unit 202, a second network currently used by the terminal to a first network is specifically: sending a detach request to a network side device of the second network, so that the terminal is detached from the second network; and sending an attach request to a network side device of the first network, so that the terminal is attached to the first network.

A network standard of the second network may be an LTE network standard, and a network standard of the first network may be a GSM network standard or a UMTS network standard.

The terminal provided by this embodiment of the present invention further includes: an attaching unit 204, where the attaching unit is configured to attach the terminal to the second network. The attaching unit 204 can ensure that after a mobile terminal is turned on in an area covered by LTE, the mobile terminal performs network selection and camps on an LTE network.

When receiving the operation instruction, from a user, for disabling a data service, the terminal first performs an operation of deactivating a PDP context, so as to release LTE wireless resources. After releasing the LTE wireless resources, the terminal hands over from the originally used second network (such as a network of an LTE network standard) to the first network (such as a network of a 2G/3G network standard).

When the user does not need a high-speed data service, the first handover unit 201 may disable the data service, and automatically hand over to a 2G/3G network. In this way, the terminal may use a CS service provided by the 2G/3G network. When the terminal receives a voice call during this period, the terminal may enjoy call connection experience that is the same as that of 2G and 3G networks. Generally, a user of a smart terminal disables a data service when the user does not use the data service. Therefore, this operation can effectively improve the call connection experience.

The receiving unit 201 is further configured to receive an operation instruction for enabling a data service.

The second handover unit 203 is configured to hand over, according to the operation instruction for enabling a data service, a first network currently used by the terminal to a second network.

A process of handing over, by the second handover unit 203, a first network currently used by the terminal to a second network is specifically: sending a RAU request to the network side device of the second network; and after the network side device receives the routing area update request, reselecting and camping on an idle-state cell of the second network, so that the terminal hands over back to the second network through reselection.

When the user needs to perform a PS service, a data service of the terminal may be enabled by means of a touch operation or a click operation. When receiving the operation instruction, from the user, for enabling a data service, the terminal hands over from the originally used first network (such as a network of a 2G/3G network standard) to the second network (such as a network of an LTE network standard).

It should be noted that because the terminal sets the network standard supported by the terminal itself to the second network, which indicates that the terminal already has an LTE capability, after activating a PDP context, the terminal sends the routing area update (RAU) request to notify the network side of the information indicating that the terminal supports the LTE network, and after the network side receives the routing area update request, the terminal reselects an idle-state cell and hands over back to the LTE network. Both the routing area update and the idle-state cell reselection belong to the prior art. This embodiment of the present invention does not specifically limit the processes, and details are not described herein.

If the terminal currently is not located within coverage of the LTE network, the terminal cannot camp on the LTE network through selection, that is, the terminal cannot hand over to the second network, and at this time, the terminal may still camp on a UMTS network or a GSM network. However, when the terminal moves to the coverage of the LTE network, the terminal hands over to the LTE network through reselection. hands over to the LTE network through reselection.

In this embodiment of the present invention, the terminal receives an operation instruction for disabling a data service, and hands over, according to the operation instruction for disabling a data service, a second network currently used by the terminal to a first network; or receives an operation instruction for enabling a data service, and hands over, according to the operation instruction for enabling a data service, a first network currently used by the terminal to a second network, where a network standard of the first network is a UMTS network standard or a GSM network standard, and a network standard of the second network is an LTE network standard. Therefore, in the present invention, when UE disables a data service and does not use a high-speed data network, an automatic handover to the first network is performed and the terminal may use a service provided by the first network. When the UE needs to perform a packet switched data service, a handover of a network standard to the second network is performed, so that the terminal hands over between the first network and the second network, thereby reducing network resources of the high-speed data network.

Correspondingly, an embodiment of the present invention further provides a terminal. FIG. 3 is a schematic diagram of another terminal according to this embodiment of the present invention. As shown in FIG. 3, the terminal provided by this embodiment includes a network interface 301 and a processor 302, and the network interface 301 and the processor 302 are connected by using a bus 303. The terminal further includes a memory 304, configured to store program code and transmit the program code to the processor. The memory may include a volatile memory, a non-volatile memory, a hard disk, or the like; and the memory may also include a combination of the foregoing types of memories. The memory 304 is connected to the processor and the network interface by using the bus 303,
where
the network interface 301 is configured to receive an operation instruction for disabling a data service; and
the processor 302 is configured to hand over, according to the operation instruction for disabling a data service, a second network currently used by the terminal to a first network; or
the network interface 301 is further configured to receive an operation instruction for enabling a data service; and
the processor 302 is configured to hand over, according to the operation instruction for enabling a data service, a first network currently used by the terminal to a second network, where
a network standard of the first network is a UMTS network standard or a GSM network standard, and a network standard of the second network is an LTE network standard.

Further, before the network interface 301 receives the operation instruction for disabling a data service, the processor 302 is further configured to attach the terminal to the second network.

Further, a process of handing over, by the processor 302 processor, a second network currently used by the terminal to a first network specifically includes: sending a detach Detach request to a network side device of the second network, so that the terminal is detached from the second network; and sending an attach Attach request to a network side device of the first network, so that the terminal is attached to the first network.

Further, the handing over, by the processor 302 processor, a first network currently used by the terminal to a second network specifically includes: sending a routing area update RAU request to the network side device of the second network; and after the network side device receives the routing area update request, reselecting and camping on an idle-state cell of the second network, so that the terminal hands over back to the second network through reselection.

Therefore, in the present invention, when UE disables a data service and does not use a high-speed data network, an automatic handover to a first network is performed and the terminal may use a service provided by the first network. When the UE needs to perform a packet switched data service, a handover of a network standard to a second network is performed, so that the terminal hands over between the first network and the second network, thereby reducing network resources of the high-speed data network.

A person in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementation manners, the objective, technical solutions, and foregoing descriptions are merely specific implementation manners of the present invention, but are not intended to limit the protection scope of the present invention as defined by the claims.

## Claims

1. A network handover method, applied to a terminal, wherein the method comprises:
receiving (101) an operation instruction from a user for disabling a data service, and automatically handing over, according to the operation instruction for disabling a data service, a second network currently used by the terminal to a first network; or
receiving (102) an operation instruction from a user for enabling a data service, and handing over through reselection, according to the operation instruction for enabling a data service, a first network currently used by the terminal to a second network, wherein
a network standard of the first network is a Universal Mobile Telecommunications System, UMTS network standard or a Global System for Mobile Communications GSM network standard, and a network standard of the second network is a Long Term Evolution LTE network standard,
wherein if the terminal is not located within coverage of the second network and cannot hand over to the second network, the terminal still camps on the first network and hands over to the second network through reselection when the terminal moves to coverage of the second network.

2. The handover method according to claim 1, wherein before the receiving (101) an operation instruction for disabling a data service, the method further comprises: attaching the terminal to the second network.

3. The handover method according to claim 1 or 2, wherein the handing over a second network currently used by the terminal to a first network specifically comprises: sending a detach request to a network side device of the second network, so that the terminal is detached from the second network; and sending an attach request to a network side device of the first network, so that the terminal is attached to the first network.

4. The handover method according to any one of claims 1 to 3, wherein the handing over a first network currently used by the terminal to a second network specifically comprises: sending a routing area update RAU request to the network side device of the second network; and after the network side device receives the routing area update request, reselecting and camping on an idle-state cell of the second network, so that the terminal hands over back to the second network through reselection.

5. A terminal, wherein the terminal comprises a receiving unit (201), and a first handover unit (202) or a second handover unit (203), wherein
the receiving unit (201) is configured to receive from a user an operation instruction for disabling a data service; and
the first handover unit (202) is configured to automatically hand over, according to the operation instruction for disabling a data service, a second network currently used by the terminal to a first network; or
the receiving unit (201) is further configured to receive from a user an operation instruction for enabling a data service; and
the second handover unit (203) is configured to hand over through reselection, according to the operation instruction for enabling a data service, a first network currently used by the terminal to a second network, wherein
a network standard of the first network is a Universal Mobile Telecommunications System UMTS network standard or a Global System for Mobile Communications GSM network standard, and a network standard of the second network is a Long Term Evolution LTE network standard,
wherein if the terminal is not located within coverage of the second network and cannot hand over to the second network, the terminal is configured to still camp on the first network and hand over to the second network through reselection when the terminal moves to coverage of the second network.

6. The terminal according to claim 5, wherein the terminal further comprises: an attaching unit (204), configured to attach the terminal to the second network.

7. The terminal according to claim 5 or 6, wherein a process of handing over, by the first handover unit, a second network currently used by the terminal to a first network is specifically: sending a detach request to a network side device of the second network, so that the terminal is detached from the second network; and sending an attach request to a network side device of the first network, so that the terminal is attached to the first network.

8. The terminal according to any one of claims 5 to 7, wherein a process of handing over, by the second handover unit, a first network currently used by the terminal to a second network is specifically: sending a routing area update RAU request to the network side device of the second network; and after the network side device receives the routing area update request, reselecting and camping on an idle-state cell of the second network, so that the terminal hands over back to the second network through reselection.

## Patentansprüche

1. Netzwerkübergabeverfahren, das auf ein Endgerät angewendet wird, wobei das Verfahren umfasst:
Empfangen (101) einer Betriebsanweisung von einem Benutzer zum Deaktivieren eines Datendienstes, und automatisches Übergeben eines zweiten Netzwerks, das gegenwärtig vom Endgerät verwendet wird, gemäß der Betriebsanweisung zum Deaktivieren eines Datendienstes an ein erstes Netzwerk; oder
Empfangen (102) einer Betriebsanweisung von einem Benutzer zum Aktivieren eines Datendienstes und Übergeben eines ersten Netzwerks, das gegenwärtig vom Endgerät verwendet wird, an ein zweites Netzwerk durch Neuselektion gemäß der Betriebsanweisung zum Aktivieren eines Datendienstes, wobei ein Netzwerkstandard des ersten Netzwerks ein UMTS-Netzwerkstandard (UMTS = Universal Mobile Telecommunications System) oder ein GSM-Netzwerkstandard (GMS = Global System for Mobile Communications) ist, und ein Netzwerkstandard des zweiten Netzwerks ein LTE-Netzwerkstandard (LTE = Long Term Evolution) ist,
wobei, wenn sich das Endgerät nicht innerhalb der Abdeckung des zweiten Netzwerks befindet und nicht an das zweite Netzwerk übergeben werden kann, das Endgerät weiterhin auf dem ersten Netzwerk campt und durch Neuselektion an das zweite Netzwerk übergeben wird, wenn sich das Endgerät in die Abdeckung des zweiten Netzwerks bewegt.

2. Übergabeverfahren nach Anspruch 1, wobei vor dem Empfangen (101) einer Betriebsanweisung zum Deaktivieren eines Datendienstes das Verfahren ferner umfasst: Anschließen des Endgeräts an das zweite Netzwerk.

3. Übergabeverfahren nach Anspruch 1 oder 2, wobei das Übergeben eines gegenwärtig vom Endgerät verwendeten zweiten Netzwerks an ein erstes Netzwerk insbesondere umfasst: Senden einer Ablösungsanforderung an eine netzwerkseitige Vorrichtung des zweiten Netzwerks, so dass das Endgerät vom zweiten Netzwerk abgelöst wird; und Senden einer Anhängeanforderung an eine netzwerkseitige Vorrichtung des ersten Netzwerks, so dass das Endgerät an das erste Netzwerk angehängt wird.

4. Übergabeverfahren nach einem der Ansprüche 1 bis 3, wobei das Übergeben eines ersten Netzwerks, das gegenwärtig vom Endgerät verwendet wird, an ein zweites Netzwerk insbesondere umfasst: Senden einer RAU-Anforderung (RAU = Routing Area Update) an die netzwerkseitige Vorrichtung des zweiten Netzwerks; und nachdem die netzwerkseitige Vorrichtung die Anforderung zum Aktualisieren des Routing-Bereichs empfangen hat, Neuselektion und Camping an einer Ruhezustand Zelle des zweiten Netzwerks, so dass das Endgerät durch Neuselektion zurück an das zweite Netzwerk übergeben wird.

5. Endgerät, wobei das Endgerät eine Empfangseinheit (201) und eine erste Übergabeeinheit (202) oder eine zweite Übergabeeinheit (203) umfasst, wobei die Empfangseinheit (201) zum Empfangen einer Betriebsanweisung zum Deaktivieren eines Datendienstes von einem Benutzer ausgelegt ist; und
die erste Übergabeeinheit (202) zum automatischen Übergeben eines zweiten Netzwerks, das gegenwärtig von dem Endgerät verwendet wird, an ein erstes Netzwerk gemäß der Betriebsanweisung zum Deaktivieren eines Datenservices ausgelegt ist; oder
die Empfangseinheit (201) ferner zum Empfangen einer Betriebsanweisung zum Aktivieren eines Datendienstes von einem Benutzer ausgelegt ist; und
die zweite Übergabeeinheit (203) zum Übergeben eines ersten Netzwerks, das derzeit vom Endgerät verwendet wird, an ein zweites Netzwerk durch Neuselektion gemäß der Betriebsanweisung zum Aktivieren eines Datenservices ausgelegt ist, wobei ein Netzwerkstandard des ersten Netzwerks ein UMTS-Netzwerkstandard (UMTS = Universal Mobile Telecommunications System) oder ein GSM-Netzwerkstandard (GMS = Global System for Mobile Communications) ist, und ein Netzwerkstandard des zweiten Netzwerks ein LTE-Netzwerkstandard (LTE = Long Term Evolution) ist,
wobei, wenn sich das Endgerät nicht innerhalb der Abdeckung des zweiten Netzwerks befindet und nicht an das zweite Netzwerk übergeben werden kann, das Endgerät zum weiteren Camping auf dem ersten Netzwerk ausgelegt ist und durch Neuselektion an das zweite Netzwerk übergeben wird, wenn sich das Endgerät in die Abdeckung des zweiten Netzwerks bewegt.

6. Endgerät nach Anspruch 5, wobei das Endgerät ferner umfasst: eine Anhängeeinheit (204), die zum Anhängen des Endgeräts an das zweite Netzwerk ausgelegt ist.

7. Das Endgerät nach Anspruch 5 oder 6, wobei ein Prozess der Übergabe eines zweiten Netzwerks, das gegenwärtig vom Endgerät verwendet wird, durch die erste Übergabeeinheit an ein erstes Netzwerk insbesondere umfasst: Senden einer Ablösungsanforderung an eine netzwerkseitige Vorrichtung des zweiten Netzwerks, so dass das Endgerät vom zweiten Netzwerk abgelöst wird; und Senden einer Anhängeanforderung an eine netzwerkseitige Vorrichtung des ersten Netzwerks, so dass das Endgerät an das erste Netzwerk angehängt wird.

8. Endgerät nach einem der Ansprüche 5 bis 7, wobei ein Prozess der Übergabe eines ersten Netzwerks, das gegenwärtig vom Endgerät verwendet wird, durch die zweite Übergabeeinheit an ein zweites Netzwerk insbesondere umfasst: Senden einer RAU-Anforderung zur Aktualisierung des Routingbereichs an die netzwerkseitige Vorrichtung des zweiten Netzwerks; und nachdem die netzwerkseitige Vorrichtung die Aktualisierungsanforderung des Routingbereichs empfangen hat, Neuselektion und Campen an einer Ruhezustandszelle des zweiten Netzwerks, so dass das Endgerät durch Wiederauswahl zurück an das zweite Netzwerk übergeben wird.

## Revendications

1. Procédé de transfert de réseau, appliqué à un terminal, dans lequel le procédé comprend de : recevoir (101) une instruction d'opération à partir d'un utilisateur pour désactiver un service de données, et transférer automatiquement, en fonction de l'instruction d'opération pour désactiver un service de données, un second réseau actuellement utilisé par le terminal vers un premier réseau; ou recevoir (102) une instruction d'opération à partir d'un utilisateur pour activer un service de données, et transférer par resélection, en fonction de l'instruction d'opération pour activer un service de données, un premier réseau actuellement utilisé par le terminal vers un second réseau, dans lequel
une norme de réseau du premier réseau est une norme de réseau de système de télécommunications mobiles universelles, UMTS, ou une norme de réseau de système mondial de communications mobiles, GSM, et une norme de réseau du second réseau est une norme de réseau d'évolution à long terme, LTE,
dans lequel, si le terminal ne se trouve pas dans la couverture du second réseau et ne peut pas basculer vers le second réseau, le terminal reste domicilié sur le premier réseau et bascule sur le second réseau par une resélection lorsque le terminal entre dans la couverture du second réseau.

2. Procédé de transfert selon la revendication 1, dans lequel, avant de recevoir (101) une instruction d'opération pour désactiver un service de données, le procédé comprend en outre de : rattacher le terminal au second réseau.

3. Procédé de transfert selon la revendication 1 ou 2, dans lequel le transfert d'un second réseau actuellement utilisé par le terminal vers un premier réseau comprend spécifiquement de : envoyer une demande de détachement à un dispositif côté réseau du second réseau, de sorte que le terminal soit détaché du second réseau ; et envoyer une demande de rattachement à un dispositif côté réseau du premier réseau, de sorte que le terminal soit rattaché au premier réseau.

4. Procédé de transfert selon l'une quelconque des revendications 1 à 3, dans lequel le transfert d'un premier réseau actuellement utilisé par le terminal vers un second réseau comprend spécifiquement de : envoyer une demande de mise à jour de zone de routage, RAU, au dispositif côté réseau du second réseau ; et lorsque le dispositif côté réseau reçoit la demande de mise à jour de zone de routage, resélectionner et se domicilier sur une cellule à l'état de repos du second réseau, de sorte que le terminal rebascule vers le second réseau par resélection.

5. Terminal, dans lequel le terminal comprend une unité de réception (201), et une première unité de transfert (202) ou une seconde unité de transfert (203), dans lequel l'unité de réception (201) est configurée pour recevoir à partir d'un utilisateur une instruction d'opération pour désactiver un service de données ; et
la première unité de transfert (202) est configurée pour transférer automatiquement, en fonction de l'instruction d'opération pour désactiver un service de données, un second réseau actuellement utilisé par le terminal vers un premier réseau ; ou
l'unité de réception (201) est en outre configurée pour recevoir à partir d'un utilisateur une instruction d'opération pour activer un service de données ; et
la seconde unité de transfert (203) est configurée pour transférer par resélection, en fonction de l'instruction d'opération pour activer un service de données, un premier réseau actuellement utilisé par le terminal vers un second réseau, dans lequel une norme de réseau du premier réseau est une norme de réseau de système de télécommunications mobiles universelles, UMTS, ou une norme de réseau de système mondial de communications mobiles, GSM, et une norme de réseau du second réseau est une norme de réseau d'évolution à long terme, LTE,
dans lequel, si le terminal ne se trouve pas dans la couverture du second réseau et ne peut pas basculer vers le second réseau, le terminal est configuré pour rester domicilié sur le premier réseau et basculer sur le second réseau par une resélection lorsque le terminal entre dans la couverture du second réseau.

6. Terminal selon la revendication 5, dans lequel le terminal comprend en outre : une unité de rattachement (204), configurée pour rattacher le terminal au second réseau.

7. Terminal selon la revendication 5 ou 6, dans lequel un processus de transfert, par la première unité de transfert, d'un second réseau actuellement utilisé par le terminal vers un premier réseau consiste spécifiquement à : envoyer une demande de détachement à un dispositif côté réseau du second réseau, de sorte que le terminal soit détaché du second réseau ; et envoyer une demande de rattachement à un dispositif côté réseau du premier réseau, de sorte que le terminal soit rattaché au premier réseau.

8. Terminal selon l'une quelconque des revendications 5 à 7, dans lequel un processus de transfert, par la seconde unité de transfert, d'un premier réseau actuellement utilisé par le terminal vers un second réseau consiste spécifiquement à : envoyer une demande de mise à jour de zone de routage, RAU, au dispositif côté réseau du second réseau ; et lorsque le dispositif côté réseau reçoit la demande de mise à jour de zone de routage, resélectionner et se domicilier sur une cellule à l'état de repos du second réseau, de sorte que le terminal rebascule vers le second réseau par une resélection.
